Europäisches Patentamt

European Patent Office

Office européen des brevets

(19)

(11) **EP 1 064 517 B1**

(12) **EUROPÄISCHE PATENTSCHRIFT**

(45) Veröffentlichungstag und Bekanntmachung des Hinweises auf die Patenterteilung:
**29.09.2004 Patentblatt 2004/40**

(21) Anmeldenummer: **99911805.2**

(22) Anmeldetag: **19.03.1999**

(51) Int Cl.$^7$: **G01B 9/02**

(86) Internationale Anmeldenummer:
**PCT/EP1999/001865**

(87) Internationale Veröffentlichungsnummer:
**WO 1999/050615 (07.10.1999 Gazette 1999/40)**

(54) **VERFAHREN UND EINRICHTUNG ZUR ABSOLUTEN INTERFEROMETRISCHEN LÄNGENMESSUNG**

METHOD AND DEVICE FOR MEASURING ABSOLUTE INTERFEROMETRIC LENGTH

PROCEDE ET DISPOSITIF DE MESURE DE LONGUEUR INTERFEROMETRIQUE ABSOLUE

(84) Benannte Vertragsstaaten:
**DE FR GB NL**

(30) Priorität: **27.03.1998 DE 19813761**

(43) Veröffentlichungstag der Anmeldung:
**03.01.2001 Patentblatt 2001/01**

(73) Patentinhaber: **LITEF GmbH**
**79115 Freiburg (DE)**

(72) Erfinder: **HANDRICH, Eberhard**
**D-79199 Kirchzarten (DE)**

(74) Vertreter: **Müller, Frithjof E., Dipl.-Ing.**
**Müller Hoffmann & Partner**
**Patentanwälte**
**Innere Wiener Strasse 17**
**81667 München (DE)**

(56) Entgegenhaltungen:
**WO-A-91/12487**      **DE-A- 4 305 458**
**GB-A- 2 276 449**

**Beschreibung**

Die Erfindung betrifft ein Verfahren und eine Einrichtung zur optischen interferometrischen Längenmessung, bei welchen der Strahl oder ein Strahlanteil eines auf eine Referenzstrecke stabilisierten Lasers hoher Kohärenzlänge in zwei Teilstrahlen aufgespalten wird. von denen der eine nach Durchlaufen einer Bezugsstrecke und der andere nach Durchlaufen einer Meßstrecke wieder vereinigt, durch einen Detektor das entstandene Interferenzbild erfaßt, das daraus gebildete Signal verstärkt und entsprechend einem vorgegebenen Modulationsmuster das Meßsignal erzeugt wird.

Bei bisher bekannten optischen interferometrischen Längenmeßsystemen wird eine stabilisierte, kohärente Laserlichtquelle verwendet, deren Lichtstrahl in zwei Teilstrahlen aufgeteilt wird: den Referenzstrahl und den Meßstrahl. Der Referenzstrahl wird nach Durchlaufen einer festen Strecke in sich zurückreflektiert; der Meßstrahl wird am Meßobjekt reflektiert. Beide rückreflektierten Teilstrahlen werden rekombiniert und führen zu einer Interferenz mit der Periode $\lambda/2$, wobei mit $\lambda$ die Wellenlänge des Laserlichts bezeichnet ist Durch Messung der Interferenzphase mit einer Genauigkeit von $10^{-4}$ kann man Auflösungen im Sub-Nanometerbereich erreichen. Allerdings ist das so gewonnene Meßsignal mehrdeutig, weil es sich mit der Periode $\lambda/2$ wiederholt. Das hat für eine Längenmessung den Nachteil, daß man mit der Messung von einer hinsichtlich ihrer örtlichen Position genau bekannten Nullmarke starten muß, von der die Perioden gezählt und gespeichert werden müssen. Dieses Meßprinzip ist als inkrementale Längenmessung zu bezeichnen.

Ferner ist in Patentschrift WO-A-9 112 487 ein Micheison-Interferometer zur Bestimmung von optischen Weglängenänderungen hoher Auflösung- offenbart welches neben einem Meßarm zwei Referenzarme aufweist, mit Hilfe derer eine Auswerteelektronik eine vorzeichenrichtige Bestimmung der Änderung der optischen Weglänge im Meßarm möglich ist.

In Patentschrift GB-A-2 276 449 ist eine Vorrichtung zur interferometrischeu Längenmessung offenbart, welche ein einfach auszuwertendes, sägezahnförmiges Interferenzsignal erzeugt.

Patentschrift DE-A-43 05 458 beschreibt ein phasenmoduliertes Interferometer zur Längenmessung, die zur Ansteuerung der Modulatoren anstelle einer Sägezahnansteuerung eine zweifache Sinusansteuerung verwendet.

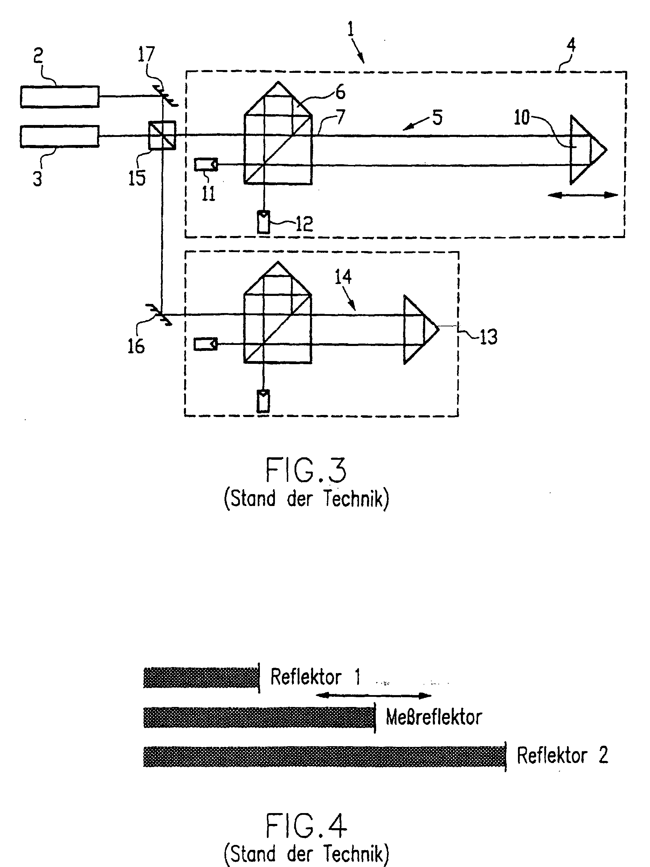

Die Figur 4 der beigefügten Zeichnung veranschaulicht das Prinzip einer bekannten Ausführungsform einer Dreistrahlinterferometrie, bei der drei (Teil-)Strahlen verwendet werden, mit dem Ziel, daß aus der Referenzstrecke zwischen einem ersten Reflektor und einem zweiten Reflektor ein Signal zur Laserstabilisierung und von einem Meßreflektor das Meßsignal gewonnen werden kann.

Eine bekannte vorteilhafte Anordnung (siehe DE 43 14 486 C2) für die Dreistrahlinterferometrie für die absolute Längenmessung ist in Fig. 3 veranschaulicht. Die dargestellte absolutmessende Interferometeranordnung 1 weist zwei durchstimmbare Laser 2, 3 auf, wobei der Laser 2 mittels einer nicht dargestellten Betriebsstromversorgung in einem modensprungfreien Wellenlängenbereich seiner Kennlinie moduliert, dagegen der Laser 3 auf einer festen Wellenlänge betrieben wird.

Weiter ist ein Meßinterferometer 4 vorgesehen, bei dem ein Interferometerarm 5 die eigentliche Meßstrecke bildet. Die Erzeugung von mindestens zwei miteinander interferierenden Teilstrahlen 6, 7 erfolgt mittels Photodetektoren 11, 12. Ferner sind die Photodetektoren 11, 12 an eine hier nicht dargestellte Zählelektronik angeschlossen und die Laser 2, 3 jeweils an eine ebenfalls nicht dargestellte Regeleinrichtung für die Laserwellenlänge. In unmittelbarer Nähe zum Meßinterferometer 4 ist zusätzlich ein Regelinterferometer 13 vorgesehen, dessen Regelsbrecke 14 eine konstante Länge aufweist, die kürzer als die halbe Länge der Meßstrecke ist. Ansonsten stimmt das Regelinterferometer 13 in seinem Aufbau mit dem Meßinterferometer 4 überein. Das Meßinterferometer 4 und das Regelinterferometer 13 werden mittels eines Primärstrahlteilers 15 sowie eines Reflektors 16 mit dem Strahl desselben Lasers 2, 3 beaufschlagt. Die Einkopplung des Strahls des Lasers 2 erfolgt über einen Reflektor 17. Die Bestimmung des Absolutabstandes $L_{abs}$ kann dabei beispielsweise so erfolgen, daß mit den gemessenen Restphasen $\varphi 1$ und $\varphi 2$ in einem Intervall um den mit der Methode der kontinuierlichen Durchstimmbarkeit bestimmten Abstand derjenige Abstand ermittelt wird, für den die Gleichung:

$$L_{abs} = (n_1 + \varphi_1)\,\frac{\lambda_1}{2} = (n_2 + \varphi_2)\,\frac{\lambda_2}{2}$$

am besten erfüllt ist, wobei das Intervall größer als die bei dieser Methode zu erwartende doppelte Meßunsicherheit und kleiner als die halbe synthetische Wellenlänge sein muß. Beim stetigen Übergang von der einen auf die andere Wellenlänge werden die durchlaufenden Interferenzen $\Delta n$ gezählt:

$$\Delta n = n_2 - n_1.$$

Aus dieser Beziehung ergibt sich:

$$n_1 = (\Delta n + (\varphi_2 - \varphi_1)\,\frac{\lambda_1}{\lambda_1 - \lambda_2}$$

Bei bekannten und stabilen Wellenlängen $\lambda_1$ und $\lambda_2$ ist also $n_1$ durch die Messung von $\Delta n$, $\varphi_1$ und $\varphi_2$ bestimmbar und damit die Länge L der Meßstrecke absolut meßbar beziehungsweise gemäß der angegebenen Formel errechenbar.

Bei diesem bekannten Verfahren der absoluten Längenmessung muß die Ordnungszahldifferenz $\Delta n$ der Interferenz und es müssen die beiden Restphasen $\varphi_1$ und $\varphi_2$ gemessen werden. Die absolute Genauigkeit hängt also von der Genauigkeit der Restphasenmessung $\varphi_1$ bzw. $\varphi_2$ ab. Bei dem bekannten Verfahren wird die Restphasenmessung durch Messung der Lichtintensität des Interferenzsignals bei den geregelten Wellenlängen $\lambda_1$ und $\lambda_2$ durchgeführt. Dadurch ist die absolute Längenmessung auf eine Genauigkeit von $\lambda/100$ (vergleiche DE 43 14 486 C2. Sp. 8) beschränkt. Außerdem hängt die Meßgenauigkeit von der Konstanz der Lichtintensität ab, was den Aufwand erhöht.

Der Erfindung liegt damit die Aufgabe zugrunde, eine absolute, interferometrische Längenmessung und eine dafür geeignete Einrichtung mit erheblich gesteigerter Auflösung und Genauigkeit bereitzustellen bei möglichst reduziertem Aufwand.

Die Lösung gemäß der Erfindung ist hinsichtlich des Verfahrens in Patentanspruch 1 definiert, wobei vorteilhafte Ergänzungen und Weiterbildungen des Erfindungsgedankens jeweils Gegenstand von abhängigen Patentansprüchen sind.

Eine erfindungsgemäße Einrichtung zur absoluten optischen interferometrischen Längenmessung gemäß der Erfindung ist Gegenstand des Patentanspruchs 6.

Der Erfindungsgedanke mit dem Ziel, die Auflösung und Genauigkeit bei der absoluten interferometrischen Längenmessung zu erhöhen, wird gemäß der Erfindung insbesondere erzielt durch konsequenten Einsatz von aktiver integrierter Optik und die Messung der Restphasen der Wellenlängenwerte $\varphi_1$ bzw. $\varphi_2$ durch Kompensation der Phase in der integrierten Optik über einen geschlossenen Regelkreis.

Dabei liegt die auf dem Gebiet der Faserkreisel gewonnene Erkenntnis und Erfahrung zugrunde, daß sich durch solche Phasenkompensationsverfahren Wellenlängenunterschiede von $10^{-7}\,\lambda$ bestimmen lassen, d. h., daß auch bei absoluter Längenmessung die Auflösung gegenüber bekannten Verfahren erheblich gesteigert wird.

Die Erfindung und vorteilhafte Einzelheiten werden nachfolgend unter Bezug auf die Zeichnungen in beispielsweiser Ausführungsform näher erläutert. Die Zeichnungen veranschaulichen in

**Fig. 1** eine erste Ausführungsform einer Anordnung oder des Aufbaus eines auf dem erfindungsgemäßen Verfahren basierenden Mehrstrahlinterferometers:

**Fig. 2** eine abgewandelte und bevorzugte Ausführungsform der Anordnung bzw. des Aufbaus eines auf dem erfindungsgemäßen Verfahren basierenden Vierstrahlinterferometers, bei dem eine besonders gute Trennung zwischen einem Meßkanal und einem Referenzkanal realisiert ist;

**Fig. 3** das bereits erläuterte Prinzip einer Dreistrahlinterferometrie für die absolute Längenmessung; und

**Fig. 4** das ebenfalls bereits erläuterte Prinzip einer inkrementalen Dreistrahlinterferometrie.

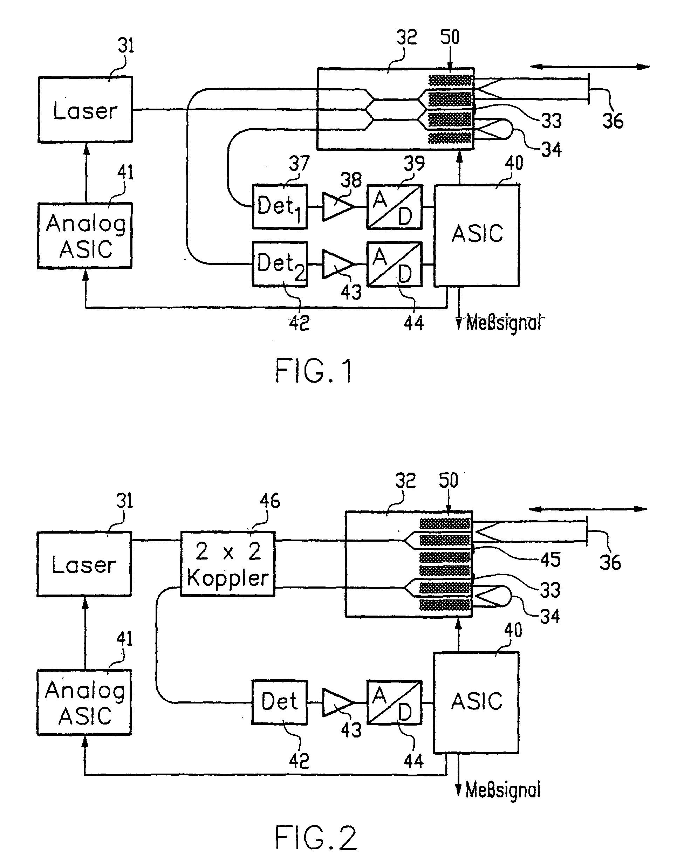

Eine erfindungsgemäße Realisierung eines Verfahrens zur optischen interferometrischen absoluten Längenmessung wird nachfolgend anhand der Fig. 1 erläutert:

Der Strahl eines Lasers 31 mit hoher Kohärenzlänge wird über eine Faserstrecke zu einem Integrierten Optik-Chip (IO-Chip) 32 geführt, der den Laserstrahl in drei Teilstrahlen aufteilt, deren Phasen über in den IO-Chip 32 integrierte Elektroden 50 für eine geeignete Signalerzeugung moduliert werden können. Unter "hoher Kohärenzlänge" werden dabei in der Praxis Längenwerte bis zu einem Meter, gegebenenfalls jedoch bis zu 100 m verstanden. Der untere Strahl wird nach Durchlaufen einer Referenzstrecke 34 reflektiert, die vorzugsweise aus Cerodur oder Stahl aufgebaut ist - wegen des geringen und gut bekannten Ausdehnungskoeffizienten. Der mittlere Strahl wird direkt am IO-Chip 32 durch eine Reflexionsschicht 33 reflektiert. Die reflektierten Strahlen des unteren und mittleren Strahls interferieren miteinander und werden an einem Detektor 37 erfaßt, in 38 verstärkt und in einem A/D-Wandler 39 digitalisiert. In einem in der Regel als ASIC realisierten Prozessor 40 wird das Interferenzsignal so ausgewertet, daß sich damit die Wellenlänge des Lasers 31 über einen ebenfalls vorzugsweise als ASIC verwirklichten Analogprozessor 41 auf die Referenzstrecke 34 stabilisieren läßt Zur Signalgewinnung wird die Phase des unteren beziehungsweise des mittleren Teilstrahls durch den ASIC 40 über den Phasenmodulator 50 in an sich bekannter Weise moduliert.

Dadurch entsteht eine modulierte Lichtintensität am Detektor 37. Im ASIC 40 wird das Signal so weiterverarbeitet, daß die auftretende Phase am Phasenmodulator 50 kompensiert wird.

Der obere Teilstrahl, der Meßstrahl, wird über eine Gradientenlinse parallel gebündelt und an einem am zu vermessenden Objekt vorhandenen Meßreflektor 36 reflektiert und interferiert dann mit dem mittleren Teilstrahl. Das Interferenzbild wird durch einen zweiten Detektor 42 erfaßt, über Verstärker 43 wiederum verstärkt und in einem zweiten A/D-Wandler 44 digitalisiert. Im ASIC 40 werden entsprechende Modulationsmuster über den Phasenmodulator 50 erzeugt.

Durch Erfassen der modulierten Lichtintensität am zweiten Detektor 42 wird ein Regelsignal im ASIC 40 aktiviert und über den Phasenmodulator 50 die auftretende Phase kompensiert. Die notwendigen Wellenlängenänderungen von $\lambda_1$ zu $\lambda_2$ steuert der ASIC 40 über den Analog-ASIC 41 und den Laser 31.

Beide Phasenmessungen für $\lambda_1$ und $\lambda_2$ erfolgen so über ein für Faserkreisel entwickeltes Servo-Loop-Verfahren, das unter anderem beschrieben ist in US 5 123 741. Mit diesem Servo-Loop-Verfahren läßt sich eine Phasenauflösung von $10^{-7}\,\lambda$ erreichen, die unabhängig von der Lichtintensität ist und sich durch eine hohe Meßbandbreite auszeichnet.

Die Fig. 2 stellt eine bevorzugte Ausführungsform der Anordnung nach der Erfindung mit besonders geringem Aufwand dar, die zudem in einer klaren Trennung zwischen Meß- und Referenzkanal als Vierstrahlinterferometer realisiert ist, wobei die beiden Interferometerabschnitte über einen 2 x 2-Koppler 46 angesteuert werden.

Bei der Darstellung der Fig. 2 sind die bereits aus Fig. 1 bekannten und oben erläuterten Bauelemente oder Baugruppen mit den gleichen Bezugshinweisen versehen, wobei für den Fachmann ersichtlich ist, daß aufgrund der Stabilisierung des Lasers 31 auf beispielsweise zwei Wellenlängen $\lambda_1$ und $\lambda_2$ entsprechende Hardware- und Software-Änderungen beim ASIC 40 bzw. dem den Laser 31 ansteuernden Analog-ASIC 41 erforderlich sind.

Gegenüber dem Aufbau nach Fig. 1 ist in Fig. 2 erkennbar, daß zunächst nur ein Detektor 42 vorhanden ist, dessen Signal im Verstärker 43 verstärkt und in 44 A/D-gewandelt wird. Die Elektronik ist dazu ersichtlicherweise nur mit einem Kanal statt bei Fig. 1 mit zwei Kanälen ausgestattet. Zusätzlich vorhanden ist dagegen der bereits erwähnte 2 x 2-Koppler 46, über den der vom Laser 31 ausgehende Lichtstrahl zunächst in zwei Meßstrahlen bzw. zwei Kanäle aufgeteilt wird. nämlich einen (oberen) Meßkanal und einen (unteren) Referenzkanal Dadurch ergibt sich eine deutlich einfachere Struktur für den IO-Chip 32, wie sich aus einem unmittelbaren Vergleich der Anordnung nach Fig. 2 mit der nach Fig. 1 ersehen läßt. Der Referenzkanal mit der Referenzstrecke 34 ist prinzipiell gleich aufgebaut wie bei der Anordnung nach Figur 1. Entsprechendes gilt für den (oberen) Meßkanal, jedoch mit dem Unterschied, daß die am IO-Chip 32 vorhandene Reflexionsschicht 33 nur dem Referenzkanal zugeordnet ist, während für den Meßkanal eine entsprechende weitere Reflexionsschicht 45 am I0-Chip 32 vorhanden ist. Die zurücklaufenden Strahlen des Referenzkanals und des Meßkanals interferieren am 2 x 2-Koppler 46. und das entstehende Interferenzbild wird am Detektor 42 erfaßt Das Meßsignal und das Referenzsignal für die Wellenlängen-Stabilisierung sind wiederum durch jeweils unterschiedliche Modulation unterscheidbar. Durch diese Trennung kann der ASIC 40 die Modulationen des Meß- und Referenzkanals über die auf die vier Kanäle wirkenden Phasenmodulatoren 50 mit unterschiedlichen Frequenzen beaufschlagen. Dadurch können die Signale an nur einem Detektor 42 erfaßt und später getrennt werden. Ebenso wie bei Fig. 1 werden die Phasen des Meß- und. Referenzkanals durch Kompensation an den Phasenmodulatoren 50 gemessen und die Wellenlängen $\lambda_1$ und $\lambda_2$ werden über den analogen ASIC 41 gesteuert.

Gegenüber bekannten Verfahren und interferometrischen Längenmeßanordnungen hat die Erfindung einerseits den Vorteil, daß auch bei nur einem auf mehrere Frequenzen zu stabilisierenden Laser eine deutlich bessere Trennung zwischen einem Meß- und einem Referenzkanal erreicht wird, mit einem hinsichtlich des Layouts deutlich einfacheren integrierten optischen Chip. Aufgrund des geschlossenen Regelkreises wird eine bessere Auflösung und Genauigkeit der Längenmessung erreicht.

**Patentansprüche**

1. Verfahren zur optischen interferometrischen Längenmessung, bei welchem der Strahl oder ein Strahlanteil eines auf eine Referenzstrecke stabilisierten Lasers hoher Kohärenzlänge in zwei Teilstrahlen aufgespalten wird. von denen der eine nach Durchlaufen einer Bezugsstrecke und der andere nach Durchlaufen einer Meßstrecke wieder vereinigt, durch einen Detektor das Interferenzbild erfaßt, das daraus gebildete Signal verstärkt und entsprechend einem vorgegebenen Modulationsmuster das Meßsignal erzeugt wird, wobei für eine absolute Messung der Länge L einer Meßstrecke der Laser zeitsequentiell auf wenigstens zwei verschiedene Wellenlängen $\lambda_1$ bzw. $\lambda_2$ stabilisiert und während eines Übergangs von einer ersten zu einer zweiten Wellenlänge die Anzahl $\Delta n$ der am Detektor durchlaufenden Interferenzen gezählt und sodann unter Berücksichtigung einer Phasenmessung $\varphi_1$, $\varphi_2$ bei beiden stabilisierten Wellenlängen $\lambda_1$, $\lambda_2$ die absolute Länge L der Meßstrecke errechnet wird. **dadurch gekennzeichnet, daß** die Phasenmessung in einem rückstellenden, die auftretenden Phasen kompensierenden Regelkreis erfolgt.

**2.** Verfahren nach Anspruch 1. **dadurch gekennzeichnet, daß** die absolute Länge L entsprechend der Beziehung

$$L = \left[\left(\Delta n + \frac{\varphi 1}{2\pi} - \frac{\varphi 2}{2\pi}\right) \frac{\lambda_1}{\lambda_1 - \lambda_2} + \frac{\varphi 1}{2\pi}\right] \frac{\lambda_1}{2}$$

errechnet wird. worin

$\Delta n$ die gemessene Anzahl der beim Übergang von der ersten zur zweiten stabilisierten Wellenlänge durchlaufenden Interferenzen, $\lambda_1$, $\lambda_2$ die erste beziehungsweise zweite stabilisierte Wellenlänge und $\varphi_1$, $\varphi_2$, die bei der ersten beziehungsweise zweiten Wellenlänge $\lambda_1$ bzw. $\lambda_2$ gemessenen Phasen bezeichnen.

**3.** Verfahren nach Anspruch 1 oder 2, **dadurch gekennzeichnet, daß** die Laserwellenlängen $\lambda_1$, $\lambda_2$ auf die jeweils gleiche Referenzlänge $I_{Ref}$ entsprechend der Beziehung

$$I_{Ref} = k \cdot \lambda_1$$

$$I_{Ref} = (k+1) \lambda_2$$

stabilisiert werden, worin k eine ganze Zahl bezeichnet.

**4.** Verfahren nach einem der vorstehenden Ansprüche **dadurch gekennzeichnet, daß** der lineare Übergang von der Stabilisierung des Lasers auf die erste Wellenlänge $\lambda_1$ zum zweiten Stabilisierungspunkt des Lasers auf die zweite Wellenlänge $\lambda_2$ durch eine zeitliche lineare Erhöhung des Laserstroms erfolgt.

**5.** Verfahren nach einem der vorstehenden Ansprüche 1 bis 3, **dadurch gekennzeichnet, daß** der lineare Übergang von der Stabilisierung des Lasers auf die erste Wellenlänge $\lambda_1$ bis zur Stabilisierung des Lasers auf die zweite Wellenlänge $\lambda_2$ dadurch erfolgt, daß der Laser auf die Referenzlänge entsprechend der Beziehung $I_{Ref} = k \cdot \lambda_1$ stabilisiert und sodann die Referenzlänge mittels einer die Referenzstrecke beeinflussenden linearen Sägezahnspannung V verändert wird ($I_{Ref}$ (V)), wobei ein Rücksprung der Sägezahnspannung (V = 0) dann erfolgt, wenn die neue Stabilisierung $I_{Ref}$ (V) = (k + 1) $\lambda_2$ erreicht ist.

**6.** Einrichtung zur absoluten optischen interferometrischen Längenmessung. basierend auf dem Verfahren nach wenigstens einem der vorstehenden Ansprüche, **gekennzeichnet durch** ein Vierstrahlinterferometer, welches einen 2 x 2-Koppler (46) zur Aufteilung eines von einem Laser (31) ausgehenden Lichtstrahles in zwei Teilstrahlen auf einen Referenzkanal einerseits und einen davon getrennten Meßkanal andererseits aufweist, wobei die beiden Teilstrahlen in einem integrierten optischen Chip (32) jeweils in zwei weitere Teilstrahlen aufteilbar sind und **durch** jeweils einen im Chip integrierten Phasenmodulator (50) beaufschlagbar sind, der **durch** einen Prozessor (40) mit unterschiedlichen Frequenzen für den Referenzkanal einerseits und den Meßkanal andererseits beaufschlagbar ist, und welches ferner einen geschlossenen Regelkreis (40, 41) zur Messung der Phasen ($\varphi_1$, $\varphi_2$) des Meß- und des Referenzkanals **durch** Kompensation an den jeweiligen Phasenmodulatoren (50) aufweist, wobei die Laser-Wellenlängen ($\lambda_1$, $\lambda_2$) über einen vom Prozessor (40) beaufschlagten Steuerschaltkreis (41) steuerbar sind.

**Claims**

**1.** A method for optical interferometric length measurement, in which the beam or a beam component of a laser of high coherence length stabilized with respect to a reference section is split into two partial beams of which one is reunited after traversing a reference section, and the other is reunited after traversing a measuring section, the interference pattern is detected by a detector, the signal formed therefrom is amplified and the measuring signal is generated in accordance with a prescribed modulation pattern, the laser being stabilized sequentially in time with respect to at least two different wavelengths $\varphi 1$ and $\varphi 2$ for the purpose of an absolute measurement of the length L of a measuring section, and the number $\Delta n$ of the interferences traversing the detector being counted during a transition from a first to a second wavelength, and the absolute length L of the measuring section then being calculated taking into account of a phase measurement $\varphi 1$, $\varphi 2$ for the two stabilized wavelengths $\lambda 1$, $\lambda 2$,

**characterized in that** the phase measurement is performed in a resetting control loop which compensates the phases occurring.

2. The method as claimed in claim 1, **characterized in that** the absolute length L is calculated in accordance with the relationship

$$L = \left[ \left( \Delta n + \frac{\varphi 1}{2\pi} - \frac{\varphi 2}{2\pi} \right) \frac{\lambda_1}{\lambda_1 - \lambda_2} + \frac{\varphi 1}{2\pi} \right] \frac{\lambda_1}{2}$$

wherein $\Delta n$ denotes the measured number of the traversing interferences upon the transition from the first to the second stabilized wavelength, $\lambda 1$, $\lambda 2$ respectively denote the first and second stabilized wavelength, and $\varphi 1$, $\varphi 2$ denote the phases measured in the case of the first and second wavelength $\lambda 1$ and $\lambda 2$, respectively.

3. The method as claimed in claim 1 or 2, **characterized in that** the laser wavelengths $\lambda 1$, $\lambda 2$ are stabilized with respect to the respectively equal reference length $l_{Ref}$ in accordance with the relationship

$$l_{Ref} = k \cdot \lambda 1$$

$$l_{Ref} = (k + 1) \lambda 2$$

k denoting a whole number.

4. The method as claimed in one of the preceding claims, **characterized in that** the linear transition from the stabilization of the laser with respect to the first wavelength $\lambda 1$ to the second stabilization point of the laser with respect to the second wavelength $\lambda 2$ is performed by means of a temporal linear increase in the laser current.

5. The method as claimed in one of the preceding claims 1 to 3, **characterized in that** the linear transition from the stabilization of the laser with respect to the first wavelength $\lambda 1$ up to the stabilization of the laser with respect to the second wavelength $\lambda 2$ is performed by virtue of the fact that the laser is stabilized with respect to the reference length in accordance with the relationship $l_{Ref} = k \cdot \lambda 1$, and then the reference length is varied by means by a linear sawtooth voltage V which influences the reference section ($l_{Ref}$ (V)), a return of the sawtooth voltage (V = 0) occuring when the new stabilization $l_{Ref}$ (V) = (k + 1) $\lambda 2$ is achieved.

6. A device for absolute optical interferometric length measurement, based on the method as claimed in at least one of the preceding claims, **characterized by** a four-beam interferometer comprising a 2 x 2 coupler (46) to split a light beam emanating from a laser (31) into two partial beams onto a reference channel, on the one hand, and a measuring channel separate therefrom, on the other hand, the two partial beams being split in an integrated optical chip (32) respectively into two further partial beams and being modulatable by each a phase modulator (50) which is integrated in the chip and to which a processor (40) applies different frequencies for the reference channel, on the one hand, and the measuring channel, on the other hand, and further comprising a closed control loop (40, 41) for measuring the phases ($\varphi_1$, $\varphi_2$) of the measuring channel and the reference channel by compensation at the respective phase modulators (50), the laser wavelengths ($\lambda_1$, $\lambda_2$) being controllable via a control circuit (41), which in turn, is controlled by the processor (40).

**Revendications**

1. Procédé de mesure de longueur interférométrique optique, dans lequel le faisceau ou une partie de faisceau d'un laser, stabilisé sur un parcours de référence, de longueur de cohérence élevée, est séparé en deux faisceaux partiels, dont l'un, après avoir parcouru un parcours de référence et l'autre, après avoir parcouru un parcours de mesure, se recombinent, l'image d'interférence est captée par un détecteur, le signal ainsi formé est amplifié et le signal de mesure est produit conformément à un modèle de modulation prédéterminé, le laser étant stabilisé, par séquences de temps, pour une mesure absolue de la longueur L d'un parcours de mesure, sur au moins deux longueurs d'ondes différentes $\lambda_1$ et $\lambda_2$ et le nombre $\Delta n$ des interférences passant sur le détecteur étant compté pendant une transition d'une première à une deuxième longueur d'onde puis la longueur absolue L du parcours de mesure étant calculée, en tenant compte d'une mesure de phase $\varphi_1$, $\varphi_2$ pour les deux longueurs d'ondes stabilisées $\lambda_1$ et $\lambda_2$, **caractérisé en ce que** la mesure de phase s'opère dans un circuit de régulation à réinitialisation, qui compense les phases qui apparaissent.

2. Procédé selon la revendication 1, **caractérisé en ce que** la longueur L absolue est calculée conformément à la relation

$$L = \left[\left(\Delta n + \frac{\varphi_1}{2\pi} - \frac{\varphi_2}{2\pi}\right)\frac{\lambda_1}{\lambda_1 - \lambda_2} + \frac{\varphi_1}{2\pi}\right]\frac{\lambda_1}{2} \; ,$$

dans laquelle $\Delta n$ désigne le nombre mesuré des interférences passant, lors de la transition de la première à la deuxième longueur d'onde stabilisée, $\lambda_1$, $\lambda_2$, la première, et respectivement la deuxième, longueur d'onde stabilisée et $\varphi_1$, $\varphi_2$ les phases mesurées lors de la première, et respectivement la deuxième, longueur d'onde, $\lambda_1$ ou $\lambda_2$.

3. Procédé selon la revendication 1 ou 2, **caractérisé en ce que** les longueurs d'ondes du laser $\lambda_1$, $\lambda_2$, sont stabilisées sur la longueur de référence, respectivement identique, $I_{réf.}$, conformément à la relation

$$I_{réf.} = k \, . \, \lambda_1$$

$$I_{réf.} = (k + 1)\lambda_2,$$

dans laquelle k désigne un nombre entier.

4. Procédé selon l'une des revendications précédentes, **caractérisé en ce que** la transition linéaire de la stabilisation du laser sur la première longueur d'onde $\lambda_1$ au deuxième point de stabilisation du laser sur la deuxième longueur d'onde $\lambda_2$ s'opère par un accroissement linéaire temporel du courant du laser.

5. Procédé selon l'une des revendications 1 à 3, **caractérisé en ce que** la transition linéaire de la stabilisation du laser sur la première longueur d'onde $\lambda_1$ jusqu'à la stabilisation du laser sur la deuxième longueur d'onde $\lambda_2$ s'opère dans le sens que le laser se stabilise sur la longueur de référence, conformément à la relation $I_{réf.} = k \, . \, \lambda_1$ puis que la longueur de référence est modifiée au moyen d'une tension en dents de scie linéaire V, qui influence le parcours de référence ($I_{réf.}(V)$), un retour de la tension en dents de scie à la valeur initiale (V = 0) se produisant alors, quand la nouvelle stabilisation $I_{réf.}$ (V) (k + 1)$\lambda_2$ est atteinte.

6. Dispositif de mesure de longueur interférométrique optique absolue, reposant sur le procédé selon au moins l'une des revendications précédentes, **caractérisé par** un interféromètre à quatre faisceaux, lequel présente, d'une part un coupleur 2 x 2 (46) pour diviser un faisceau lumineux, qui part d'un laser (31), en deux faisceaux partiels sur un canal de référence et, d'autre part un canal de mesure, qui en est séparé, les deux faisceaux partiels pouvant être divisés, dans une puce optique intégrée (32), chacun en deux autres faisceaux partiels et pouvant être soumis chacun à l'action d'un modulateur de phase (50), intégré dans la puce, modulateur qui peut être soumis à l'action d'un processeur (40) avec des fréquences différentes, d'une part pour le canal de référence et d'autre part pour le canal de mesure et lequel présente en outre un circuit de régulation fermé (40, 41), pour mesurer les phases ($\varphi_1$, $\varphi_2$) des canaux de mesure et de référence, par compensation dans les modulateurs de phase (50) respectifs, les longueurs d'ondes ($\lambda_1$, $\lambda_2$) du laser pouvant être commandées par l'intermédiaire d'un circuit de commutation de commande (41), soumis à l'action du processeur (40).

FIG.1

FIG.2

EP 1 064 517 B1

FIG.3
(Stand der Technik)

Reflektor 1

Meßreflektor

Reflektor 2

FIG.4
(Stand der Technik)